# EUROPEAN PATENT SPECIFICATION

(11) **EP 3 862 405 B1**
(45) Date of publication and mention of the grant of the patent: **28.01.2026**
(21) Application number: 19869753.4
(22) Date of filing: 19.09.2019
(51) Int. Cl.: C09J 183/07, C09J 183/05, C09J 11/06

(54) **ULTRAVIOLET CURABLE SILICONE ADHESIVE COMPOSITION AND METHOD FOR PRODUCING MULTILAYER BODY**
UV-HÄRTBARE SILIKONKLEBSTOFFZUSAMMENSETZUNG UND VERFAHREN ZUR HERSTELLUNG EINES MEHRSCHICHTIGEN KÖRPERS
COMPOSITION ADHÉSIVE DE SILICONE DURCISSABLE AUX ULTRAVIOLETS ET PROCÉDÉ DE PRODUCTION D'UN CORPS MULTICOUCHE

(30) Priority: 02.10.2018 JP 2018187259
(43) Date of publication of application: 11.08.2021
(73) Proprietor: SHIN-ETSU CHEMICAL CO., LTD., Tokyo 100-0004 (JP)
(72) Inventor: OZAI, Toshiyuki, Annaka-shi, Gunma 379-0224 (JP); TOYOSHIMA, Takeharu, Annaka-shi, Gunma 379-0224 (JP)
(74) Representative: Mewburn Ellis LLP
(86) International application number: PCT/JP2019/036736
(87) International publication number: WO 2020/071137

(56) References cited:
- WO-A1-2015/019705
- CN-A- 107 880 844
- JP-A- 2009 220 384
- JP-A- 2014 001 341
- JP-A- 2014 169 412
- JP-A- 2016 160 322
- JP-A- 2017 050 322
- JP-A- 2019 108 471
- JP-A- H06 503 594
- "Silicone Fluids", 25 March 2009 (2009-03-25), XP055183176, Retrieved from the Internet <URL:http://www.gelest.com/goods/pdf/siliconefluids.pdf> [retrieved on 20150415]

## Description

### TECHNICAL FIELD

The present invention relates to an ultraviolet-curable silicone adhesive composition the curing of which is initiated by ultraviolet irradiation, and to a method for producing a laminated body using the same.

### BACKGROUND ART

Electronic devices with an image display capability, such as displays and touch panels, generally have a protective cover panel of excellent light transmittivity that is made of a highly transparent resin such as acrylic resin or polycarbonate, glass or the like, and an image display panel equipped with image display elements on a substrate. Touch panels also have a touch sensor panel that enables operation on the panel itself.

To enhance the visibility and mechanical strength of the display, a transparent adhesive composition such as an ultraviolet-curable acrylic resin composition is used as the adhesive composition for laminating together these panels. Of these, because an ultraviolet addition-curable transparent silicone adhesive composition carries out curing of the resin composition using a UV-activated platinum catalyst-mediated hydrosilylation reaction, curing of the composition is not inhibited by oxygen in the air as in the case of acrylic resin compositions and the composition gradually cures following ultraviolet irradiation. On account of these characteristics, ultraviolet/addition-curable transparent silicone adhesive compositions have the advantage that the sequence of the adhesive composition coating step, the ultraviolet irradiation and composition curing step and the step of laminating the members together can be set in any way.

Also, to enhance visibility, it is advantageous for the cured adhesive layer to have a high transparency and, for reasons having to do with the angle of reflection, for the differences in refractive index between the adhesive layer, the cover panel and the image display panel to be small. Hence, an adhesive layer that uses a siloxane polymer organically modified with phenyl groups or the like is more suitable than a dimethylsiloxane polymer. However, addition-curable organomodified silicone adhesive compositions are known to have poor resistance to discoloration by heat; at high temperatures, the adhesive layer tends to undergo yellow discoloration. Also, when the adhesive layer undergoes a large change in hardness upon exposure to high temperatures, warping and distortion of the device may arise. For reasons such as this, there is a concern that the image display capability of the device will decrease, leading to a loss of reliability.

Patent Document 3 discloses a photo-thermal dual-cured organosilicon LOCA composition comprising: (A) 50-80 parts of vinyl phenyl silicone oil, (B) 2-10 parts of ethylene phenyl silicon resin, (C) 2-15 parts of a phenyl crosslinking agent containing hydrogen at terminals, (D) 2-10 parts of a phenyl crosslinking agent containing hydrogen on side chains, (E) 0.1-0.3 parts of an inhibitor, (F) 0.1-0.3 parts of a platinum catalyst, (G) 0.1-0.3 parts of a photo-initiation type platinum catalyst, (H) 1-3 parts of a tackifier and (I) 0.01-0.1 parts of a fire retardant.

### PRIOR ART DOCUMENTS

### Patent Documents

Patent Document 1: JP-A 2014-169412
Patent Document 2: JP-A 2014-001341
Patent Document 3: CN 107880844 A

### SUMMARY OF THE INVENTION

### TECHNICAL PROBLEM

In view of the above circumstances, the object of the invention is to provide an ultraviolet-curable silicone adhesive composition that gives a cured material which, even at high temperatures, undergoes little change in hardness and little yellowing.

### SOLUTION TO THE PROBLEM

The inventors have conducted extensive investigations aimed at achieving these objects. As a result, they have discovered that an ultraviolet-curable silicone adhesive composition containing components (A) to (D) below gives a cured material which exhibits excellent heat resistance. This discovery ultimately led to the present invention.

Accordingly, the present invention provides the ultraviolet-curable silicone adhesive composition and method for producing a laminated body as defined in the claims.

### ADVANTAGEOUS EFFECTS OF THE INVENTION

The ultraviolet-curable silicone adhesive composition of the invention cures under mild conditions of between about 23°C and about 60°C to give a transparent cured material which, even in a high temperature environment, undergoes little change in hardness and has excellent resistance to discoloration by heat. The ultraviolet-curable silicone adhesive composition of the invention having such properties can be suitably used in the lamination of optical devices, displays, touch panels and the like.

### DESCRIPTION OF EMBODIMENTS

The present invention is described in detail below.

### Component (A)

Component (A) in the ultraviolet-curable silicone adhesive composition of the invention is an organopolysiloxane represented by average unit formula (1) below.

(R¹R²₂SiO_{1/2})₂(Ar₂SiO_{2/2})ₐ(R²₂SiO_{2/2})_{b} (1)

In the formula, each R¹ is independently an alkenyl group, each R² is independently a substituted or unsubstituted monovalent saturated hydrocarbon group, and each Ar is independently a substituted or unsubstituted aryl group.

The alkenyl group R¹ is preferably one having from 2 to 10 carbon atoms, and more preferably one having from 2 to 6 carbon atoms. Specific examples include vinyl, allyl, butenyl, pentenyl and hexenyl groups. A vinyl group is especially preferred.

The monovalent saturated hydrocarbon group R² is preferably one having from 1 to 12 carbon atoms, and more preferably one having from 1 to 6 carbon atoms. Specific examples include substituted or unsubstituted monovalent saturated hydrocarbon groups which may be linear, branched or cyclic, including linear or branched alkyl groups such as methyl, ethyl, n-propyl, isopropyl, n-butyl, sec-butyl, tert-butyl, n-pentyl, n-hexyl and n-heptyl groups; cycloalkyl groups such as the cyclohexyl group; and halogenated alkyl groups such as chloromethyl, 3-chloropropyl and 3,3,3-trifluoropropyl groups. Of these, from the standpoint of heat resistance, a methyl group is preferred.

The aryl group Ar is preferably one having from 6 to 20 carbon atoms, and more preferably one having from 6 to 10 carbon atoms. Specific examples include phenyl, naphthyl, tolyl, xylyl and mesityl groups, and halogen-substituted aryl groups such as the chlorophenyl group. A phenyl group is preferred.

Of all the hydrocarbon groups (R¹, R² and Ar) bonded to silicon in component (A), the methyl group content is preferably from 20 to 99 wt%, more preferably from 40 to 97 wt%, and even more preferably from 60 to 95 wt%. Within this range, a cured material of excellent heat resistance can be obtained.

The subscript 'a' is an integer from 1 to 100, preferably from 1 to 50, and more preferably from 20 to 40; the subscript 'b' is an integer from 1 to 1,000, preferably from 1 to 500, and more preferably from 100 to 400; and a/(a+b) is a number from 0.01 to 0.4, and preferably from 0.05 to 0.3.

The molecular weight of component (A) is not particularly limited. However, the standard polystyrene-equivalent weight-average molecular weight (Mw), as determined by gel permeation chromatography (GPC) using the solvent THF, is preferably from 500 to 100,000, more preferably from 700 to 50,000, and even more preferably from 1,000 to 30,000.

Component (A) may be of one type used alone, or two or more may be used in combination.

### Component (B)

Component (B) in the ultraviolet-curable silicone adhesive composition of the invention is an organohydrogenpolysiloxane that has at least two, preferably at least three, Si-H groups per molecule and is represented by the following average compositional formula (2).

R³_{c}H_{d}SiO_{(4-c-d)/2} (2)

Each R³ is independently a substituted or unsubstituted monovalent hydrocarbon group, exclusive of aliphatic unsaturated hydrocarbon groups, in which the number of carbon atoms is preferably from 1 to 20, and more preferably from 1 to 10.

The monovalent hydrocarbon group may be linear, branched or cyclic. Specific examples include aliphatic saturated monovalent hydrocarbon groups, including linear or branched alkyl groups such as methyl, ethyl, n-propyl, isopropyl, n-butyl, sec-butyl, tert-butyl and n-hexyl groups, and cycloalkyl groups such as the cyclohexyl group; aryl groups such as phenyl and tolyl groups; aromatic or aromatic group-containing monovalent hydrocarbon groups, including the benzyl group and aralkyl groups such as the phenylethyl group; halogen-substituted monovalent hydrocarbon groups such as the 3,3,3-trifluoropropyl group; and cyano-substituted monovalent hydrocarbon groups such as the cyanoethyl group. Of these, a methyl group is preferred.

From the standpoint of, for example, the compatibility of component (B) with component (A) and the properties of the cured material, preferably at least 20 mol%, and more preferably at least 50 mol%, of the total number of R³ and Si-H groups in component (B) are methyl groups.

The subscript 'c' is a positive number such that 0.7 ≤ c ≤ 2.5, preferably 0.7 ≤ c ≤ 2.1, and more preferably 1 ≤ c ≤ 1.8. When 'c' is less than 0.7, there is a concern that foaming will occur during curing and the change in hardness over time tends to be large; at more than 2.5, a sufficient hardness may not be obtained.

The subscript 'd' is a positive number such that 0.01 ≤ d ≤ 1, preferably 0.02 ≤ d ≤ 1, and more preferably 0.1 ≤ d ≤ 1. When 'c' is less than 0.01, sufficient hardness may not be obtained; at more than 1, there is a concern that foaming will occur during curing and the change in hardness over time tends to be large.

The sum c+d is such that 0.8 ≤ c+d ≤ 2.7, preferably 1 ≤ c+d ≤ 2.4, and more preferably 1.6 ≤ c+d ≤ 2.2. When c+d is less than 0.8, the cured material tends to be hard and brittle, as a result of which cracks readily form in the laminate; when it exceeds 2.7, the cured material tends to be soft and does little to reinforce the laminate.

Component (B) has a kinematic viscosity at 23°C which is preferably from 1 to 200 mm²/s, and more preferably from 2 to 50 mm²/s. In this invention, the kinematic viscosity is a value measured using a Cannon Fenske viscometer.

Component (B) may be of one type used alone, or two or more may be used in combination. The organohydrogenpolysiloxane of component (B) is included in an amount such that the molar ratio of hydrosilyl groups in component (B) with respect to the alkenyl groups in component (A) and subsequently described component (D), expressed as hydrosilyl groups/alkenyl groups, is preferably from 0.5 to 2, and more preferably from 1 to 1.2. Within such a range, the curability of the composition and the hardness of the resulting cured material are excellent.

### Component (C)

Component (C) is a platinum metal catalyst which is activated by light having a wavelength of between 200 and 500 nm. That is, it is a catalyst for promoting hydrosilylation reactions between alkenyl groups in component (A) and silicon-bonded hydrogen atoms in component (B) which is inactive under light shielding but, upon the irradiation of light having a wavelength of between 200 and 500 nm, changes to a platinum metal catalyst that is active at room temperature.

Examples of this component (C) include (η⁵-cyclopentadienyl)trialiphatic platinum compounds and derivatives thereof. Of these, (cyclopentadienyl)trimethyl platinum, (methylcyclopentadienyl)trimethyl platinum, and derivatives wherein these cyclopentadienyl groups are modified are especially preferred. Bis(β-diketonato)platinum compounds are also suitable examples of component (C). Of these, bis(acetylacetonato)platinum compounds and derivatives wherein these acetylacetonato groups are modified are especially preferred.

The amount of component (C) included is not limited so long as it is an amount that promotes curing (hydrosilylation reactions) of this composition, but is preferably such that the weight basis of platinum metal atoms within this component with respect to the combined weight of components (A) and (B) in the composition is within the range of 0.01 to 500 ppm, more preferably 0.05 to 100 ppm, and even more preferably 0.01 to 50 ppm.

### Component (D)

Component (D) is a compound having one terminal alkenyl group per molecule. It is a component which does not take part in the creation of three-dimensional crosslinkages by addition reactions and its purpose is to impart flexibility and reliability to the inventive composition.

Component (D) includes an organic compound of formula (3) below.

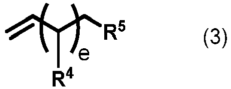

In the formula, R⁴ and R⁵ are each independently a hydrogen atom, an alkyl group, a triorganosilyl group or an organosiloxanyl group of 2 to 4 silicon atoms.

The alkyl group of R⁴ and R⁵ is preferably one having from 1 to 5 carbon atoms. Specific examples include methyl, ethyl, n-propyl and n-butyl groups.

The triorganosilyl group is exemplified by trialkylsilyl groups, trialkoxysilyl groups, dialkylalkoxysilyl groups and alkyldialkoxysilyl groups. The number of carbon atoms on the alkyl groups and alkoxy groups therein is preferably from 1 to 5, and more preferably from 1 to 3. Trimethylsilyl, triethylsilyl, trimethoxysilyl and triethoxysilyl groups are even more preferred.

The organosiloxanyl group of 2 to 4 silicon atoms is preferably one in which the number of carbon atoms on the organo group is from 1 to 5. Specific examples include tris(trimethylsiloxy)silyl, pentamethyldisiloxanyl and nonamethyltetrasiloxanyl groups.

**In** the formula, the subscript 'e' is an integer from 1 to 20. From the standpoint of compatibility and reactivity, an integer from 3 to 12 is preferred; an integer from 5 to 12 is even more preferred.

Specific examples of component (D) include linear olefins such as 1-octene, 1-decene, 1-dodecene, 1-tetradecene and 1-hexadecene; and branched olefins such as 3-ethyl-1-octene, 5-ethyl-1-octene, 7-ethyl-1-octene, 3-propyl-1-octene and 3-butyl-1-octene.

Silane-modified compounds, siloxane-modified compounds and the like of the structural formulas shown below may be suitably used for increasing the compatibility with the polysiloxanes. Here and below, "Me" stands for a methyl group and "Et" stands for an ethyl group.

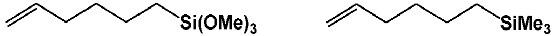

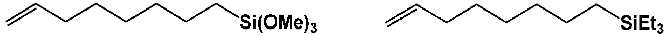

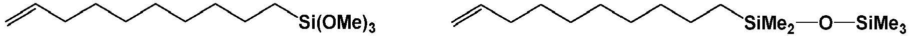

Only one type of component (D) may be added, or a plurality of two or more types may be added at the same time. The amount of addition is preferably from 0.05 to 10 parts by weight, and more preferably from 0.05 to 5 parts by weight, per 100 parts by weight of the combined amount of components (A) and (B). At a component (D) content below the above range, the resin may become hard, adversely affecting the display members. At a content greater than the above range, the resin tends to be soft and does little to reinforce the display.

### Component (E)

Where necessary, an adhesive modifier may be added as component (E) to the ultraviolet-curable silicone adhesive composition of the invention. Examples of adhesive modifiers include organic compounds containing at least one from the group of functional groups consisting of (meth)acrylic, carbonyl, epoxy, alkoxysilyl and amide groups per molecule.

Specific examples of adhesive modifiers containing an alkoxysilyl group include γ-(glycidoxypropyl)trimethoxysilane (trade name: KBM-403, from Shin-Etsu Chemical Co., Ltd.), γ-(methacryloxypropyl)trimethoxysilane (trade name: KBM-503, from Shin-Etsu Chemical Co., Ltd.), and hydrolytic condensation products of these. Further examples include the siloxane compounds of the following structural formulas.

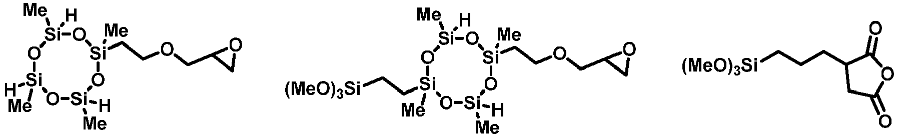

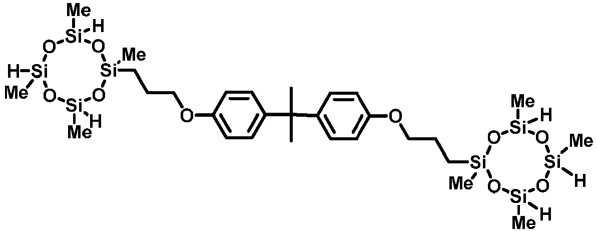

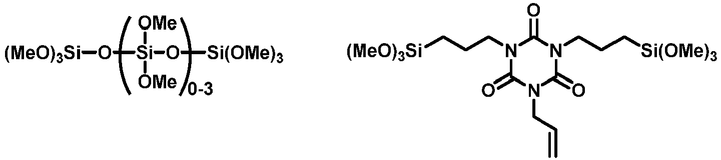

When component (E) is used, one such ingredient may be added alone, or a plurality of two or more may be added together. The amount of addition per 100 parts by weight of components (A) and (B) combined is preferably from 0.05 to 10 parts by weight, and more preferably from 0.05 to 5 parts by weight. At a component (E) content within this range, a suitable adhesiveness can be imparted.

### Component (F)

A reaction regulator may be optionally added as component (F) so that thickening or gelation do not occur prior to heat curing when preparing the ultraviolet-curable silicone adhesive composition of the invention or when coating it onto a substrate.

Specific examples of the reaction regulator include 3-methyl-1-butyn-3-ol, 3-methyl-1-pentyn-3-ol, 3,5-dimethyl-1-hexyn-3-ol, 1-ethynylcyclohexanol, ethynylmethyldecylcarbinol, 3-methyl-3-trimethylsiloxy-1-butyne, 3-methyl-3-trimethylsiloxy-1-pentyne, 3,5-dimethyl-3-trimethylsiloxy-1-hexyne, 1-ethynyl-1-trimethylsiloxycyclohexane, bis(2,2-dimethyl-3-butynoxy)dimethylsilane, 1,3,5,7-tetramethyl-1,3,5,7-tetravinylcyclotetrasiloxane and 1,1,3,3-tetramethyl-1,3-divinyldisiloxane. 1-Ethynylcyclohexanol, ethynylmethyldecylcarbinol and 3-methyl-1-butyn-3-ol are preferred.

When component (F) is used, the content thereof per 100 parts by weight of components (A) and (B) combined is preferably from 0.01 to 2 parts by weight, and more preferably from 0.01 to 0.1 part by weight. Within this range, a reaction-regulating effect is fully exhibited.

### Other Ingredients

In addition to the above components (A) to (F), the ultraviolet-curable silicone adhesive composition of the invention may include also the other ingredients listed below, insofar as doing so does not detract from the objects of the invention.

For example, thixotropy regulators such as fumed silica, reinforcing agents such as crystalline silica, antioxidants, light stabilizers, heat resistance enhancers such as metal oxides and metal hydroxides, colorants such as titanium oxide, thermal conductivity-imparting fillers such as alumina and crystalline silica, viscosity modifiers such as non-reactive silicone oils having no reactive functional groups, electrical conductivity-imparting agents such as silver, gold and other metal powders, and pigments and dyes for coloration.

### Method for Producing Laminated Body

The ultraviolet-curable silicone adhesive composition of the invention can be suitably used to laminate together, through the inventive adhesive composition, two substrates that make up a laminated body such as an optical device or a display or touch panel. The method for producing the laminated body includes a coating step, an ultraviolet irradiation step, a curing step and a lamination step. The respective steps may be carried out by way of, for example, the following methods.

### • Coating Step

In the coating step, the adhesive composition of the invention is coated onto one of the substrates. The coating method is exemplified by techniques that involve coating with a slit coater, dam-and-fill coating and fishbone coating. The coating amount is preferably one that gives an adhesive layer thickness after curing of from 100 to 5,000 µm.

The substrates with which the ultraviolet-curable silicone adhesive composition of the invention is used are exemplified by composite materials, metal members, plastic members and ceramic members. In particular, substrates employed in such areas as the covering, casting, adhesion and sealing of casings and members in electrical applications, electronic applications, optical applications and the like may be used. The inventive composition can be used also on substrates that have been activated by a known pretreatment step such as primer treatment, plasma treatment or excimer light treatment.

### • Ultraviolet Irradiation Step

In the ultraviolet irradiation step, the adhesive composition is irradiated with ultraviolet light. The ultraviolet irradiation method used may be, for example, a method that utilizes a 365 nm UV-LED lamp, a metal halide lamp or the like as the ultraviolet source to irradiate a suitable amount of ultraviolet light.

Light having a wavelength of preferably between 200 and 500 nm, and more preferably between 200 and 350 nm, is used for the ultraviolet irradiation. From the standpoint of the rate of cure and preventing discoloration, the irradiation temperature is preferably between 20°C and 80°C, the irradiation intensity is preferably from 30 to 2,000 mW/cm² and the irradiation dose is preferably from 150 to 10,000 mJ/cm².

### • Curing Step

In the curing step, the ultraviolet-irradiated composition is cured. The curing method may be, for example, a technique that forms an adhesive layer by leaving the ultraviolet-irradiated adhesive composition at rest in a predetermined environment and allowing it to cure. The curing temperature of the ultraviolet-curable silicone adhesive composition of the invention is not particularly limited, although curing is preferably effected for a period of from 1 minute to 1 day in an open-air atmosphere at between 20°C and 60°C.

### • Lamination Step

In the lamination step, the other substrate is superimposed on the adhesive composition layer or adhesive layer to form a laminated body in which the two substrates are laminated together through the adhesive composition layer or adhesive layer. The method of lamination may be, for example, one that sets the adhesive layer/substrate laminate wherein the adhesive is in a liquid to semi-solid state after passing through the coating step, ultraviolet irradiation step and curing step, the adhesive composition layer/substrate laminate following the coating step, or the adhesive composition layer/substrate assembly following the coating step and the ultraviolet irradiation step within a vacuum or atmospheric-pressure laminator, and then superimposes the other substrate on the adhesive composition layer or adhesive layer and laminates them together; when the layer is an adhesive composition layer, the remaining step or steps are carried out to effect curing and form a laminated body.

To keep curing of the inventive adhesive composition from being inhibited by oxygen and also to enable the curing time from when ultraviolet irradiation is carried out to be changed by the design of the adhesive composition or the heating temperature, the sequence of the coating step, ultraviolet irradiation step, curing step and lamination step can be freely selected and changed according to the structure of the device being manufacturing, such as a flat display or a curved display.

For example, when used to produce a laminated body having a cover panel and an image display panel, the production method of the invention may begin by coating the ultraviolet-curable silicone adhesive composition of the invention onto the image display panel. Next, using a UV-LED lamp having a wavelength peak at 365 nm, the adhesive composition is irradiated for 30 seconds at 23°C with ultraviolet light having an irradiation intensity, based on 365-nm light, of 100 mW/cm² to a dose of 3,000 mJ/cm², after which it is left at rest for 30 minutes in a 23°C environment, allowing the adhesive composition to cure and thus form an adhesive layer. Using a vacuum laminator, the cover panel is then superimposed on the adhesive layer, enabling a laminated body in which the cover panel and the image display panel are laminated together through the adhesive layer to be obtained. Alternatively, following the ultraviolet irradiation step, by using a vacuum laminator to first superimpose the cover panel on the adhesive composition, the image display panel and the cover panel are laminated together through the adhesive composition layer, after which the adhesive composition layer can be cured by leaving it at rest for 30 minutes in a 60°C environment. Or, because the cover panel is transparent, vacuum lamination may be carried out following the coating step, after which ultraviolet irradiation may be carried out through the cover panel to effect the cure. Another possibility is to coat adhesive composition that has already been ultraviolet irradiated onto the image display panel, carry out vacuum lamination with the cover panel, and allow curing to take place.

### EXAMPLES

Examples and Comparative Examples are given below to illustrate the invention.

Below, "Me" stands for a methyl group, "Bu" stands for a butyl group, "Ph" stands for a phenyl group and "Vi" stands for a vinyl group. Also, Mw represents the standard polystyrene-equivalent weight-average molecular weight obtained by GPC measurement using a THF solvent.
Component (A):
   (A-1) An organopolysiloxane of average compositional formula (4) below (Mw: 28,000) 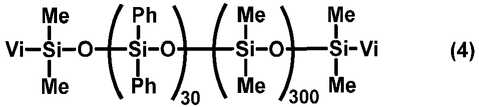 (wherein the siloxane units may be arranged in any order)
Component (B):
   (B-1) A dimethylsiloxane capped on both ends of the molecular chain with hydrodimethylsiloxy groups and having a kinematic viscosity at 23°C of 17 mm²/s, of formula (5) below

      Me_{2.0}H_{0.1}SiO_{[1.9/2]} (5)
   (B-2) A dimethylsiloxane capped on both ends of the molecular chain with hydrodimethylsiloxy groups and having a kinematic viscosity at 23°C of 27 mm²/s, of formula (6) below

      Me_{1.8}H_{0.3}SiO_{[1.9/2]} (6)
Comparative Ingredient: (B-3) An organohydrogensiloxane of formula (7) below 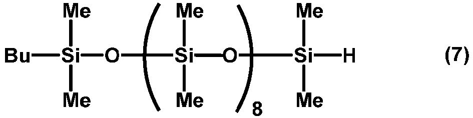
Component (C):
   (C-1) Toluene solution of trimethyl(methylcyclopentadienyl)platinum complex (platinum content, 0.5 wt%)
Component (D):
   (D-1) 1-Tetradecene (Linealene 14, from Idemitsu Kosan Co., Ltd.)
   (D-2) 8-(1-octenyl)trimethoxysilane (Shin-Etsu Co., Ltd.)
Comparative Ingredient:
   (D-3) Diallyl bisphenol ether
Component (E):
   (E-1) The cyclic siloxane compound of formula (8) below

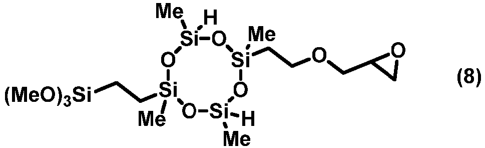

### Other Ingredients:

Fumed silica (Aerosil NSX-200; average primary particle size, 8 nm; from Nippon Aerosil Co., Ltd.)

### EXAMPLES 1 TO 3 AND COMPARATIVE EXAMPLES 1 TO 3

Silicone adhesive compositions were prepared by mixing together the above ingredients in the amounts (parts by weight) shown in Table 1.

### Penetration Depth

The prepared silicone adhesive compositions were poured into glass Petri dishes and, using a UV-LED lamp having a peak wavelength of 365 nm, each composition was irradiated with ultraviolet light at 23°C in such manner that, based on 365-nm light, the irradiation intensity was 100 mW/cm² and the dose was 1,500 mJ/cm².

Following the completion of irradiation, the composition was left to stand for 24 hours at 23°C in an open-air atmosphere, allowing it to cure.

The penetration depth of each of the resulting cured materials was measured with a penetrometer (1/4 cone) from Rigosha K.K. by a method based on JIS K 6249.

Letting the penetration depth immediately after curing be the initial penetration depth, the penetration depths after 500-hour and 1,000-hour heat resistance tests at 95°C were evaluated. The results are shown in Table 1.

### Yellowness Index (YI)

Each composition was poured into a frame of two slide glasses (thickness, 100 µm) with a 460 µm thick spacer in between, and the compositions were cured under the same curing conditions as above.

The yellowness index of each of the resulting cured materials was measured with a spectrophotometer (Konica Minolta Japan, Inc.) by a method based on ASTM E313.

Letting the yellowness index immediately after curing be the initial yellowness index, the yellowness indexes after 500-hour and 1,000-hour heat resistance tests at 95°C were evaluated. The results are shown in Table 1.

**Table 1**

| Blending amount (pbw) | | Example 1 | Example 2 | Example 3 | Comparative Example 1 | Comparative Example 2 | Comparative Example 3 |
|---|---|---|---|---|---|---|---|
| (A) | (A-1) | 100 | 100 | 100 | 100 | 100 | 100 |
| (B) | (B-1) | 9.5 | 9.5 | 9.5 | 9.5 | 4 | 9.5 |
| | (B-2) | 2 | 2 | 2 | 0.2 | 1.3 | 2 |
| Comparative Ingredient | (B-3) | | | | 2 | 2 | |
| (C) | (C-1) | 0.6 | 0.6 | 0.6 | 0.6 | 0.6 | 0.6 |
| (D) | (D-1) | 3 | | 1.5 | | | |
| | (D-2) | | 2.7 | 1.5 | | | |
| Comparative Ingredient | (D-3) | | | | 1 | | 1 |
| (E) | (E-1) | 0.5 | 0.5 | 0.5 | 0.5 | 0.5 | 0.5 |
| Others | Fumed silica | 5 | 5 | 5 | 5 | 5 | 5 |
| Si-H groups/alkenyl groups | | 1.0 | 1.0 | 1.0 | 1.1 | 1.5 | 1.0 |
| Initial penetration depth (1/10 mm) | | 37 | 40 | 38 | 40 | 41 | 16 |
| Penetration depth after 500-hour heat resistance test at 95°C (1/10 mm) | | 28 | 35 | 31 | 28 | 7 | 5 |
| Penetration depth after 1,000-hour heat resistance test at 95°C (1/10 mm) | | 25 | 30 | 28 | 20 | 5 | 2 |
| Initial YI | | -0.19 | -0.18 | -0.19 | -0.18 | -0.18 | -0.18 |
| YI after 500-hour heat resistance test at 95°C | | 0.74 | 0.82 | 0.77 | 7.01 | 9.3 | 6.5 |
| YI after 1,000-hour heat resistance test at 95°C | | 0.60 | 0.72 | 0.65 | 11.3 | 15.1 | 10.2 |

As shown in the results for Examples 1 to 3, the ultraviolet-curable silicone adhesive compositions of the invention gave cured compositions having a low change in hardness and a low resistance to yellowing by heat and having an excellent reliability. On the other hand, in Comparative Examples 1 to 3 which did not use component (D) of the invention, the degree of yellowing after the heat resistance tests was high.

## Claims

1. An ultraviolet-curable silicone adhesive composition comprising:
(A) linear organopolysiloxane represented by average unit formula (1) below
(R¹R²₂SiO_{1/2})₂(Ar₂SiO_{2/2})ₐ(R²₂SiO_{2/2})_{b} (1)
wherein each R¹ independently is an alkenyl group, each R² independently is a substituted or unsubstituted monovalent saturated hydrocarbon group, each Ar independently is a substituted or unsubstituted aryl group, the subscript 'a' is an integer from 1 to 100, the subscript 'b' is an integer from 1 to 1,000, and a/(a+b) is a number from 0.01 to 0.4,
(B) organohydrogenpolysiloxane that has at least two Si-H groups per molecule and is represented by average compositional formula (2) below
R³_{c}HdSiO_{(4-c-d)/2} (2)
wherein each R³ independently is a substituted or unsubstituted monovalent hydrocarbon group, exclusive of aliphatic unsaturated hydrocarbon groups; and 'c' and 'd' are positive numbers that satisfy the conditions 0.7 ≤ c ≤ 2.5, 0.01 ≤ d ≤ 1 and 0.8 ≤ c+d ≤ 2.7,
(C) platinum metal catalyst that is activated by light having a wavelength of between 200 and 500 nm, and
(D) compound having one terminal alkenyl group per molecule.
wherein component (D) includes a compound of formula (3) below 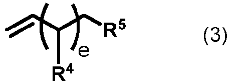
wherein R⁴ and R⁵ are each independently a hydrogen atom, an alkyl group, a triorganosilyl group or an organosiloxanyl group of 2 to 4 silicon atoms; and the subscript 'e' is an integer from 1 to 20.

2. Ultraviolet-curable silicone adhesive composition of claim 1, wherein in formula (1) the subscript 'a' is an integer from 1 to 50, the subscript 'b' is an integer from 1 to 500, and a/(a+b) is a number from 0.05 to 0.3.

3. Ultraviolet-curable silicone adhesive composition of claim 1 or 2, wherein in formula (1) the subscript 'a' is an integer from 20 to 40 and the subscript 'b' is an integer from 100 to 400.

4. Ultraviolet-curable silicone adhesive composition of any one of claims 1 to 3, wherein in formula (2) 'c' and 'd' are positive numbers that satisfy the conditions 0.7 ≤ c ≤ 2.1, 0.02 ≤ d ≤ 1 and 1 ≤ c+d ≤ 2.4.

5. Ultraviolet-curable silicone adhesive composition of any one of claims 1 to 4, wherein in formula (2) 'c' and 'd' are positive numbers that satisfy the conditions 1 ≤ c ≤ 1.8, 0.1 ≤ d ≤ 1 and 1.6 ≤ c+d ≤ 2.2.

6. Ultraviolet-curable silicone adhesive composition of any one of claims 1 to 5, wherein the molar ratio of hydrosilyl groups included in component (B) with respect to the alkenyl groups included in components (A) and (D), expressed as hydrosilyl groups/alkenyl groups, is from 0.5 to 2.

7. Ultraviolet-curable silicone adhesive composition of claim 6, the molar ratio is from 1 to 1.2.

8. Ultraviolet-curable silicone adhesive composition of any one of claims 1 to 7, wherein component (C) includes (η⁵-cyclopentadienyl)trialiphatic platinum compound or bis(β-diketonato)platinum compound.

9. Ultraviolet-curable silicone adhesive composition of any one of claims 1 to 8, wherein the triorganosilyl group of R⁴ and R⁵ is selected from trialkylsilyl groups, trialkoxysilyl groups, dialkylalkoxysilyl groups and alkyldialkoxysilyl groups, and/or the organosiloxanyl group of 2 to 4 silicon atoms of R⁴ and R⁵ is selected from tris(trimethylsiloxy)silyl, pentamethyldisiloxanyl and nonamethyltetrasiloxanyl groups.

10. Ultraviolet-curable silicone adhesive composition of any one of claims 1 to 9, wherein in formula (3) the subscript 'e' is an integer from 3 to 12.

11. Ultraviolet-curable silicone adhesive composition of any one of claims 1 to 10, further comprising (E) a compound having at least one selected from (meth)acrylic, carbonyl, epoxy, alkoxysilyl and amide groups per molecule.

12. A method for producing a laminated body having a first substrate, a second substrate superimposed on the first substrate, and an intervening adhesive layer obtained using an adhesive composition of any one of claims 1 to 11, which method comprises the steps of:
coating the adhesive composition onto a surface of the first substrate;
irradiating the adhesive composition with ultraviolet light;
curing the adhesive composition to form an adhesive layer; and
superimposing the second substrate on the adhesive composition layer or adhesive layer and laminating together the first and second substrates through the adhesive composition layer or adhesive layer.

## Patentansprüche

1. **UV-härtbare** Silikonklebstoff-Zusammensetzung, die Folgendes umfasst:
(A) ein unverzweigtes Organopolysiloxan, das durch die nachfolgende mittlere Einheitsformel (1) dargestellt ist:
(R¹R²₂SiO_{1/2})₂(Ar₂SiO_{2/2})ₐ(R²₂SiO_{2/2})₃ (1)
worin die R¹ jeweils unabhängig eine Alkenylgruppe sind, die R² jeweils unabhängig eine substituierte oder unsubstituierte, einwertige gesättigte Kohlenwasserstoffgruppe sind, wobei die Ar jeweils unabhängig eine substituierte oder unsubstituierte Arylgruppe sind, wobei das tiefgestellte Zeichen "a" eine ganze Zahl von 1 bis 100 ist, wobei das tiefgestellte Zeichen "b" eine ganze Zahl von 1 bis 1.000 ist und a/(a+b) eine Zahl von 0,01 bis 0,4 ist;
(B) Organohydrogenpolysiloxan, das zumindest zwei Si-H-Gruppen pro Molekül aufweist und durch die nachfolgende mittlere Zusammensetzungsformel (2) dargestellt ist:
R³_{c}H_{d}SiO_{(4-c-d)/2} (2)
worin die R³ jeweils unabhängig eine substituierte oder unsubstituierte einwertige Kohlenwasserstoffgruppe sind, wobei aliphatische ungesättigte Kohlenwasserstoffgruppen ausgeschlossen sind, und "c" und "d" jeweils positive Zahlen sind, welche die folgenden Bedingungen erfüllen: 0,7 ≤ c ≤ 2,5, 0,01 ≤ d ≤ 1 und 0,8 ≤ c+d ≤ 2,7;
(C) einen Platinmetall-Katalysator, der durch Licht mit einer Wellenlänge von zwischen 200 und 500 nm aktiviert wird; und
(D) eine Verbindung, die eine endständige Alkenylgruppe pro Molekül aufweist, wobei die Komponente (D) eine Verbindung der nachfolgenden Formel (3) umfasst: 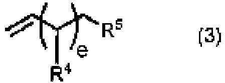
worin R⁴ und R⁵ jeweils unabhängig ein Wasserstoffatom, eine Alkylgruppe, eine Triorganosilylgruppe oder eine Organosiloxanylgruppe mit 2 bis 4 Siliciumatomen sind und das tiefgestellte Zeichen "e" eine ganze Zahl von 1 bis 20 ist.

2. UV-härtbare Silikonklebstoff-Zusammensetzung nach Anspruch 1, wobei in Formel (1) das tiefgestellte Zeichen "a" eine ganze Zahl von 1 bis 50 ist, das tiefgestellte Zeichen "b" eine ganze Zahl von 1 bis 500 ist und a/(a+b) eine Zahl von 0,05 bis 0,3 ist.

3. UV-härtbare Silikonklebstoff-Zusammensetzung nach Anspruch 1 oder 2, wobei in Formel (1) das tiefgestellte Zeichen "a" eine ganze Zahl von 20 bis 40 ist und das tiefgestellte Zeichen "b" eine ganze Zahl von 100 bis 400 ist.

4. UV-härtbare Silikonklebstoff-Zusammensetzung nach einem der Ansprüche 1 bis 3, wobei in Formel (2) "c" und "d" jeweils positive Zahlen sind, welche die folgenden Bedingungen erfüllen: 0,7 ≤ c ≤ 2,1, 0,02 ≤ d ≤ 1 und 1 ≤ c+d ≤ 2,4.

5. UV-härtbare Silikonklebstoff-Zusammensetzung nach einem der Ansprüche 1 bis 4, wobei in Formel (2) "c" und "d" jeweils positive Zahlen sind, welche die folgenden Bedingungen erfüllen: 1 ≤ c ≤ 1,8, 0,1 ≤ d ≤ 1 und 1,6 ≤ c+d ≤ 2,2.

6. UV-härtbare Silikonklebstoff-Zusammensetzung nach einem der Ansprüche 1 bis 5, wobei das Molverhältnis zwischen Hydrosilylgruppen, die in der Komponente (B) enthalten sind, und den Alkenylgruppen, die in Komponente (A) und (D) enthalten sind, ausgedrückt als Hydrosilylgruppen/Alkenylgruppen, 0,5 bis 2 beträgt.

7. UV-härtbare Silikonklebstoff-Zusammensetzung nach Anspruch 6, wobei das Molverhältnis 1 bis 1,2 beträgt.

8. UV-härtbare Silikonklebstoff-Zusammensetzung nach einem der Ansprüche 1 bis 7, wobei Komponente (C) eine (η⁵-Cyclopentadienyl)trialiphat-Platinverbindung oder eine Bis(β-diketonato)-Platinverbindung umfasst.

9. UV-härtbare Silikonklebstoff-Zusammensetzung nach einem der Ansprüche 1 bis 8, wobei die Triorganosilylgruppe von R⁴ und R⁵ aus Trialkylsilylgruppen, Trialkylsilylgruppen, Dialkylalkoxysilylgruppen und Alkyldialkoxysilylgruppen ausgewählt ist und/oder die Organosiloxanylgruppe von 2 bis 4 Siliciumatomen von R⁴ und R⁵ aus Tris(trimethylsiloxy)silyl-, Pentamethyldisiloxanyl- und Nonamethyltetrasiloxanyl-Gruppen ausgewählt ist.

10. UV-härtbare Silikonklebstoff-Zusammensetzung nach einem der Ansprüche 1 bis 9, wobei in Formel (3) das tiefgestellte Zeichen "e" eine ganze Zahl von 3 bis 12 ist.

11. UV-härtbare Silikonklebstoff-Zusammensetzung nach einem der Ansprüche 1 bis 10, die weiters (E) eine Verbindung umfasst, die zumindest eine aus (Meth)acrylsäure-, Carbonyl-, Epoxy-, Alkoxysilyl- und Amidgruppen ausgewählte Gruppe pro Molekül aufweist.

12. Verfahren zur Herstellung eines laminierten Körpers, der ein erstes Substrat, ein zweites Substrat, das auf dem ersten Substrat übergelagert ist, und eine dazwischen liegende Klebstoffschicht umfasst, die unter Verwendung einer Klebstoff-Zusammensetzung nach einem der Ansprüche 1 bis **11** erhalten wird, wobei das Verfahren die folgenden Schritte umfasst:
das Aufschichten der Klebstoff-Zusammensetzung auf eine Oberfläche des ersten Substrats;
das Bestrahlen der Klebstoff-Zusammensetzung mit UV-Licht;
das Härten der Klebstoff-Zusammensetzung zum Ausbilden einer Klebstoffschicht; und
das Überlagern des zweiten Substrats auf die Klebstoff-Zusammensetzungsschicht oder die Klebstoffschicht und das Zusammenlaminieren des ersten und des zweiten Substrats über die Klebstoff-Zusammensetzungsschicht oder die Klebstoffschicht.

## Revendications

1. Composition adhésive de silicone durcissable aux ultraviolets, comprenant :
(A) un organopolysiloxane linéaire représenté par la formule d'unité moyenne (1) ci-dessous
(R¹R²₂SiO_{1/2})₂(Ar₂SiO_{2/2})ₐ(R²₂SiO_{2/2})_{b} (1)
dans laquelle chaque R¹ est indépendamment un groupe alcényle, chaque R² est indépendamment un groupe hydrocarboné saturé monovalent substitué ou non substitué, chaque Ar est indépendamment un groupe aryle substitué ou non substitué, l'indice « a » est un nombre entier de 1 à 100, l'indice « b » est un nombre entier de 1 à 1 000, et a/(a +b) est un nombre de 0,01 à 0,4,
(B) un organohydrogénopolysiloxane qui présente au moins deux groupes Si-H par molécule et est représenté par la formule de composition moyenne (2) ci-dessous
R³_{c}H_{d}SiO_{(4-c-d)/2} (2)
dans laquelle chaque R³ est indépendamment un groupe hydrocarboné monovalent substitué ou non substitué, à l'exclusion de groupes hydrocarbonés insaturés aliphatiques ; et « c » et « d » sont des nombres positifs qui satisfont les conditions 0,7 ≤ c ≤ 2,5, 0,01 ≤ d ≤ 1 et 0,8 ≤ c+d ≤ 2,7,
(C) un catalyseur au platine métallique activé par une lumière présentant une longueur d'onde comprise entre 200 et 500 nm, et
(D) un composé présentant un groupe alcényle terminal par molécule,
dans laquelle le composant (D) comprend un composé de formule (3) ci-dessous 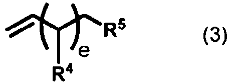
dans laquelle R⁴ et R⁵ sont chacun indépendamment un atome d'hydrogène, un groupe alkyle, un groupe triorganosilyle ou un groupe organosiloxanyle de 2 à 4 atomes de silicium ; et l'indice « e » est un nombre entier de 1 à 20.

2. Composition adhésive de silicone durcissable aux ultraviolets selon la revendication 1, dans laquelle dans la formule (1), l'indice « a » est un nombre entier de 1 à 50, l'indice « b » est un nombre entier de 1 à 500, et a/(a+b) est un nombre de 0,05 à 0,3.

3. Composition adhésive de silicone durcissable aux ultraviolets selon la revendication 1 ou 2, dans laquelle, dans la formule (1), l'indice « a » est un nombre entier de 20 à 40 et l'indice « b » est un nombre entier de 100 à 400.

4. Composition adhésive de silicone durcissable aux ultraviolets selon l'une quelconque des revendications 1 à 3, dans laquelle dans la formule (2), « c » et « d » sont des nombres positifs qui satisfont aux conditions 0,7 ≤ c ≤ 2,1, 0,02 ≤ d ≤ 1 et 1 ≤ c+d ≤ 2,4.

5. Composition adhésive de silicone durcissable aux ultraviolets selon l'une quelconque des revendications 1 à 4, dans laquelle dans la formule (2), « c » et « d » sont des nombres positifs qui satisfont aux conditions 1 ≤ c ≤ 1,8, 0,1 ≤ d ≤ 1 et 1,6 ≤ c+d ≤ 2,2.

6. Composition de silicone adhésive durcissable aux ultraviolets selon l'une quelconque des revendications 1 à 5, dans laquelle le rapport molaire de groupes hydrosilyle inclus dans le composant (B) par rapport aux groupes alcényle inclus dans les composants (A) et (D), exprimé par groupes hydrosilyle/groupes alcényle, est de 0,5 à 2.

7. Composition adhésive de silicone durcissable aux ultraviolets selon la revendication 6, le rapport molaire étant de 1 à 1,2.

8. Composition de silicone adhésive durcissable aux ultraviolets selon l'une quelconque des revendications 1 à 7, dans laquelle le composant (C) inclus un composé de platine (η⁵-cyclopentadiényl)trialiphatique ou un composé de platine bis(β-dicétonato).

9. Composition adhésive de silicone durcissable aux ultraviolets selon l'une quelconque des revendications 1 à 8, dans laquelle le groupe triorganosilyle de R⁴ et R⁵ est choisi parmi des groupes trialkylsilyle, des groupes trialcoxysilyle, des groupes dialkylalcoxysilyle et des groupes alkyldialcoxysilyle, et/ou le groupe organosiloxanyle de 2 à 4 atomes de silicium de R⁴ et R⁵ est choisi parmi des groupes tris(triméthylsiloxy)silyle, pentaméthyldisiloxanyle et nonaméthyltétrasiloxanyle.

10. Composition adhésive de silicone durcissable aux ultraviolets selon l'une quelconque des revendications 1 à 9, dans laquelle dans la formule (3), l'indice « e » est un nombre entier de 3 à 12.

11. Composition adhésive de silicone durcissable aux ultraviolets selon l'une quelconque des revendications 1 à 10, comprenant en outre (E) un composé présentant au moins un, choisi parmi les groupes (méth)acrylique, carbonyle, époxy, alcoxysilyle et amide, par molécule.

12. Procédé de production d'un corps stratifié présentant un premier substrat, un second substrat superposé sur le premier substrat, et une couche adhésive intermédiaire obtenue en utilisant une composition adhésive selon l'une quelconque des revendications 1 à 11, lequel procédé comprend les étapes consistant à :
appliquer en revêtement la composition adhésive sur une surface du premier substrat ;
irradier la composition adhésive avec une lumière ultraviolette ;
faire durcir la composition adhésive pour former une couche adhésive ; et
superposer le second substrat sur la couche de composition adhésive ou la couche adhésive et stratifier ensemble les premier et second substrats à travers la couche de composition adhésive ou la couche adhésive.
